# EUROPEAN PATENT APPLICATION

(11) **EP 4 834 099 A1**
(43) Date of publication of application: **04.11.2026**
(21) Application number: 26162217.9
(22) Date of filing: 04.03.2026
(51) Int. Cl.: A01K 1/01

(54) **PET LITTER BOX**

(30) Priority: 30.04.2025 CN 202510566274
(71) Applicant: Shenzhen Beibanqiu Network Technology Co, Ltd, Shenzhen, Guangdong (CN)
(72) Inventor: LUO, Weidong, Shenzhen, Guangdong, 518000 (CN); ZHOU, Jiujun, Shenzhen, Guangdong, 518000 (CN)
(74) Representative: Plavsa, Olga

(57) **Abstract**

The present invention discloses a pet litter box, comprising: a base (1), a litter tray (2) detachably installed in the base, an upper shell (3) detachably connected to the base or the litter tray, a baffle grate (4) is connected to the upper shell for sifting litter particles and litter clumps, a driving assembly (5) detachably connected to both sides of the litter tray for driving the litter tray to rotate, thereby sifting the clean litter particles into the space formed by the baffle grate, the upper shell and the litter tray, while the litter clumps are sifted outside the baffle grate and into the waste bin (6); The bottom of the base is detachably connected with several supporting feet (7) and a waste bin for storing litter clumps; when stored, the upper shell, the driving assembly, the supporting feet, and the waste bin all fit entirely within the litter tray.

## Description

### TECHNICAL FIELD

The present invention relates to the field of pet supplies, and specifically to a pet litter box.

### BACKGROUND

The design of traditional pet litter boxes has long suffered from numerous limitations, making it difficult to meet the practical needs of modern pet-owning families.

The non-removable nature of conventional pet litter boxes restricts their flexibility in compact storage and space-saving arrangement. Due to their large size, these pet litter boxes occupy considerable space when not in use, rendering them impractical for households with limited living space. Furthermore, traditional pet litter boxes present significant drawback during packaging and transportation. Their fixed shape and large volume necessitate higher quantities of packaging materials, consequently increasing costs of transportation.

For businesses, this not only elevates logistics expenses but also curtails the product's market competitiveness.

For consumers, the unpacking and assembling process after purchase is cumbersome, preventing immediate use. In summary, the shortcomings of traditional pet litter boxes in storage, packaging, and transportation have become key issues restricting their further development.

### SUMMARY

To overcome the shortcomings of existing technology, the present invention provides a pet litter box that is easy to disassemble, assemble, and convenient for transportation, which is set out in the appended set of claims.

The beneficial effects of the present invention are:

During transportation or storage, the upper shell, driving assembly, supporting feet, and waste bin are stored in the litter tray. In this case, the entire pet litter box occupies a volume equivalent to that of the litter tray alone. By reducing the volume and occupying less space, the storage space of the pet litter box is capable being compressed, Consequently, logistics costs and packaging materials are diminished, thereby lowering the cost of packaging and transportation.

Before used, it needs to assemble the supporting feet and waste bin under the base, mount the upper shell onto the litter tray, mount the baffle grate between the upper shell and litter tray, install the driving assembly on both sides of the litter tray, Subsequently, mount the assembled litter tray, upper shell, baffle grate, and driving assembly together on the top of the base. This assembly process is swift and easy for users to operate on their own.

### BRIEF DESCRIPTION OF THE DRAWINGS

In order to provide a clearer explanation of the technical solution in the embodiments of the present invention, a brief introduction will be given to the accompanying drawings required for the description of the embodiments.
Figure 1 is a schematic assembled view of a pet litter box;
Figure 2 is a working state view of the pet litter box when it rotates to sift litter clumps and litter particles;
Figure 3 is an exploded view of the pet litter box;
Figure 4 is a schematic view of the pet litter box installed on the toilet;
Figure 5 is a front view of a driving assembly in Embodiment 1;
Figure 6 is an exploded view of the driving assembly in Embodiment 1;
Figure 7 is a first cross-sectional view of the driving assembly in Embodiment 1;
Figure 8 is a rear view of the driving assembly in Embodiment 1;
Figure 9 is a schematic view of a mounting member on the litter tray corresponding to the drive assembly in Embodiment 1;
Figure 10 is a perspective structural view of a second connecting rod, a first button, a supporting member, a rotating member, and a third elastic member in Embodiment 1;
Figure 11 is a second cross-sectional view of the driving assembly in Embodiment 1;
Figure 12 is a perspective structural view of a first inner shell in Embodiment 2;
Figure 13 is a front view of the first inner shell in Embodiment 2;
Figure 14 is a perspective structural view of a second inner shell in Embodiment 2;
Figure 15 is an exploded view of the first inner shell and the second inner shell in Embodiment 2;
Figure 16 is an exploded view of the second inner shell in Embodiment 2;
Figure 17 is a perspective structural view of a waste bin;
Figure 18 is a top view of the waste bin;
Figure 19 is a schematic view of the waste bin being connected to the base;
Figure 20 isa first perspective structural view of a base;
Figure 21 is a second perspective structural view of the base;
Figure 22 is a third perspective structural view of the base;
Figure 23 is a schematic structural view of an interlocking fixing structure;
Figure 24 is a top view of a toilet bracket;
Figure 25 is a cross-sectional view of the toilet bracket.

The reference numbers correspond as follows:
1. base; 10. chamber; 11. insertion hole; 2. litter tray; 3. upper shell; 4. baffle grate; 5. driving assembly; 50. gear rack; 501. second grip slot; 502. first inner shell; 5021. first guide column; 503. second inner shell; 504. first through slot; 505. first groove; 506. second through slot; 51. inner shell; 511. clipping gap; 513. second connecting rod; 514. first button; 515. supporting member; 516. rotating member; 517. fixing member; 518. third elastic member; 519. third through slot; 52. outer shell; 521. insertion fitting; 522. first grip slot; 523. first connecting rod; 524. first elastic member; 525. wedge block; 526. second wedge block; 527. second elastic member; 528. second slot; 53. first driving component; 54. driving gear; 55. pulling block; 551. pulling block sliding groove; 56. fixing block; 561. first connecting member; 562. second connecting member; 6. waste bin; 61. first section; 611. First guide groove; 612. limiting protrusion; 62. second section; 621. first limiting block; 622. first limiting hole; 623. second limiting hole; 7. supporting feet; 8. interlocking fixing structure; 81. second driving component; 82. linkage gear; 83. supporting rod; 9. toilet bracket; 91. clamping assembly; 911. clamping block; 912. protruding block; 913. fourth elastic member; 914. clamping groove; 915. clamping guide column; 92, second guide groove; 14. full-bin sensor; 15. sensing assembly; 16. third slot; 17. second limiting block; 18. first slot; 19. linear guide rails.

### DETAILED DESCRIPTION OF EMBODIMENTS

The following description, incorporating embodiments and accompanying drawings, provides a clear and comprehensive exposition of the invention's conception, specific structure, and resulting technical effects, enabling a thorough understanding of its objectives, characteristics, and advantages. It should be noted that the described embodiments represent only a portion of the invention's possible implementations, not an exhaustive list. Other embodiments derived by those skilled-in the art based on the present invention, without requiring creative labour, fall-within the scope of the invention's protection. Furthermore, all connection relationships described herein do not exclusively denote direct component junctions. Rather, they encompass the addition or removal of connecting accessories to form optimal connection structures according to specific implementation requirements. The various technical features of the present invention may be combined interchangeably provided they do not conflict with one another.

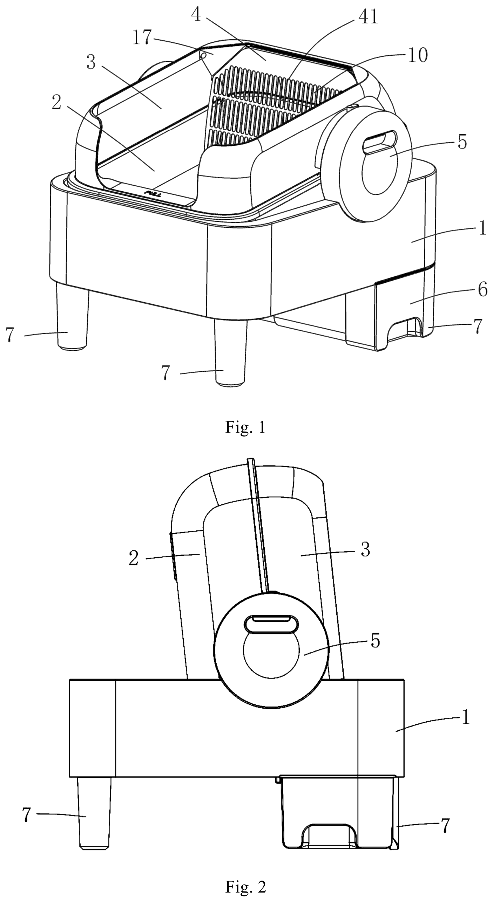

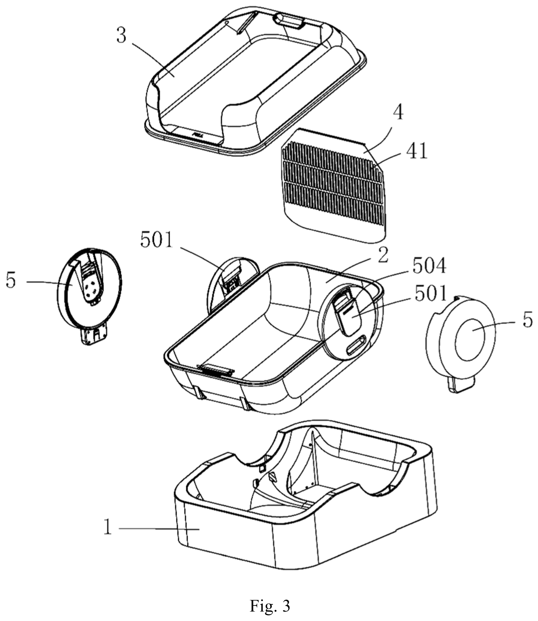

Referring to Figures 1 to 3, a pet litter box is provided, which comprises: a base 1, a litter tray 2 detachably installed on the base 1, an upper shell 3 detachably connected onto the base 1 or the litter tray 2, a baffle grate 4 connected to the upper shell 3 for sifting litter particles and litter clumps, several supporting feet 7 and a waste bin 6 for storing litter clumps detachably connected to a bottom of the base, and a driving assembly 5 detachably connected to two sides of the litter tray 1. The driving assembly 5 is configured to rotate the litter tray 2, such that the clean litter particles are sifted into a chamber 10 formed by a back surface of the baffle grate 4, the upper shell 3 and the litter tray 2, while the litter clumps are sifted outside the baffle grate 4 and fall into the waste bin 6.

The supporting feet 7 are located on two sides of the waste bin 6.

When the pet litter box is to be stored, all of the upper shell 3, the driving assembly 5, the supporting feet 7, and the waste bin 6 are configured to be fitted entirely within the litter tray 2.

In this embodiment, all modules of the pet litter box are configured to be detachable connected. During transportation or storage, the upper shell 3, driving assembly 5, supporting feet 7, and waste bin 6 can be stored in the litter tray 2. In this case, the entire pet litter box occupies a volume equivalent to that of the litter tray 2 alone. By reducing the volume and occupying less space, the storage space of the entire pet litter box is capable being compressed, consequently, logistics costs and packaging materials are diminished, thereby lowering the cost of packaging and transportation.

Before used, user needs to assemble the supporting feet 7 and waste bin 6 under the base 1, mount the upper shell 3 onto the litter tray 2, mount the baffle grate 4 between the upper shell 3 and litter tray 2, install the driving assembly 5 on both sides of the litter tray 2, and subsequently, mount the assembled litter tray 2, upper shell 3, baffle grate 4, and driving assembly 5 together on the top of the base 1. This assembly process is swift and easy for users to operate on their own.

Specifically, the litter tray 2 is formed as an open cavity, and the volume of the cavity of the litter tray 2 is greater than that of the upper shell 3, ensuring the upper shell 3 can be completely stored in the litter tray 2. Similarly, the waste bin 6 also comprises an open cavity capable of accommodating the supporting feet 7, the baffle grate 4, and driving assembly 5.

Specifically, the base 1 is equipped with an installation cavity, whose depth is greater than or equal to the that of the litter tray 2. After storing all components in the litter tray 2, the litter tray 2 is then mounted into the base 1.

Specifically, the connecting relationship between the litter tray 2 and the upper shell 3, the connecting relationship between the base 1 and the litter tray 2, and the connecting relationship between the supporting feet 7 and the base 1 can be one or more combinations of magnetic attraction, snap-fit, pin-fit or key-fit connections.

Specifically, the baffle grate 4 is pivotally connected to the upper shell 3.

The present invention provides two embodiments of the driving assembly 5:

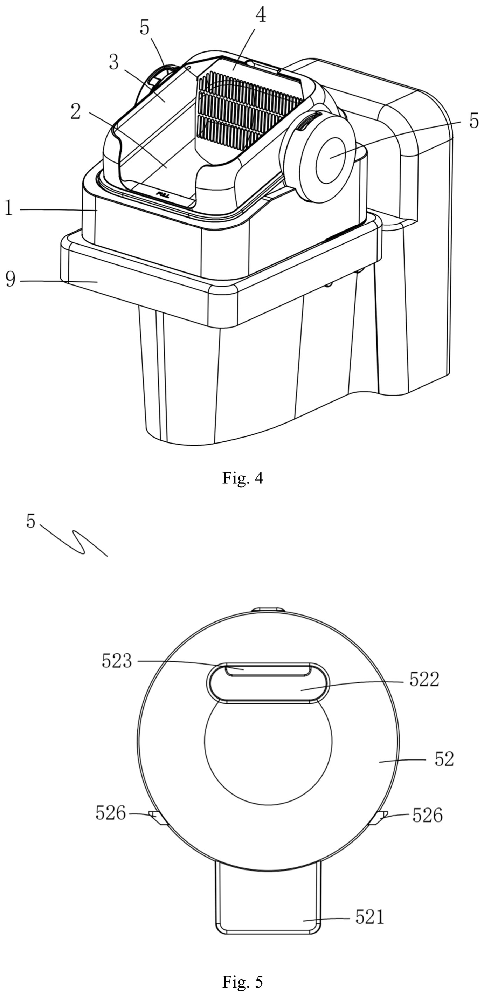

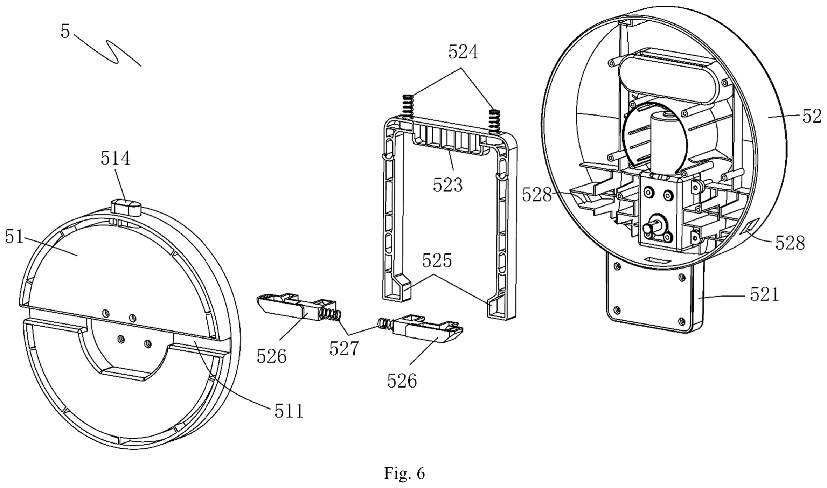

Referring to Figures 5-7, 16, and 20, the common structure of the two embodiments is that the driving assembly 5 comprises an inner shell 51 firmly connected to the litter tray 2, and an outer shell 52 rotatably connected to the inner shell 51, wherein an insertion fitting 521 is arranged at a bottom of the outer shell 52, and the base 1 is configured form an insertion hole 11 corresponding to the insertion fitting 521.

A gear rack 50 arranged on an inner circumferential wall of the inner shell 51.

A first driving component 53 is fixed in the outer shell 52, and an output end of the first driving component 53 is connected to a driving gear 54 that meshes with the gear rack 50, the first driving component 53 is configured to drive the driving gear 54 to rotate, thereby driving the inner shell 51 and the litter tray 2 to rotate relative to the base 1 and the outer shell 52.

After the pet defecates, the litter particles clump into solid masses and form as litter clumps. In this case, there are both litter clumps and loose litter particles in the litter tray 2. During cleaning the litter clumps, the first driving component 53 outputs power to drive the driving gear 54 to rotate. The driving gear 54 meshes with the gear rack 50 of the inner shell 51, causing the inner shell 51 to drive the litter tray 2 to rotate. As the litter tray 2 rotates to a specific angle, the upper shell 3 is positional at the lowest point (refer to figure 2 for the state). Concurrently, during the rotation of the litter tray 2, litter particles and litter clumps fall onto the baffle grate 4 under the action of gravity and then litter particles fall into the chamber enclosed by the upper shell 3 and the litter tray 2 through the baffle grate 4. The baffle grate 4 is configured with multiple sieve holes 41 with a diameter larger than the loose litter particles and smaller than the litter clumps, thereby the litter clumps are sifted out of the baffle grate 4. The first driving component 53 continuously drives the driving gear 54 to rotate, and the sifted litter clumps fall into the waste bin 6 under the action of gravity. Once no litter clumps on one side of the litter tray 2 and the baffle grate 4, the pet litter box is now in a state of dumping litter clumps. Driving assembly 5 then drives litter tray 2 to reset, and loose litter particles passes through baffle grate 4 again, falls and returns to the litter tray 2 for pet defecation, thereby completing the process of cleaning the litter clumps. The entire process is automatically powered by the first driving component 53, without requiring manual intervention.

In the existing technology, the gear rack is positioned externally on the inner shell, and the first driving component is fixed in the base. This configuration results in a large volume for the driving assembly, hindering its integration within the litter tray.

Specifically, the baffle grate 4 may completely cover the cross-section of the cavity enclosed by the upper shell 3 and the litter tray 2, and the sieve holes are evenly distributed on the baffle grate 4 to ensure complete separation of loose litter particles and litter clumps.

More specifically, the inner shell 51 is configured with a clipping gap 511 on one side facing the litter tray 2, and the clipping gap 511 is configured to engage an edge of the litter tray 2 to fix the relative position between the litter tray 2 and the driving assembly 5.

The clipping gap 511 is engaged with the edge of the litter tray 2 to compensate for insufficient connection points between the two components, thereby preventing instability during rotation when the driving assembly 5 drives the litter tray 2 to rotate, and ensuring normal sifting operation.

Moreover, two sides of the litter tray 2 are engaged with driving assembly 5, enhancing rotational stability during operation and thereby ensuring the normal functioning of the sifting mechanism.

Specifically, when the pet litter box is in a state of dumping litter clumps, in order to prevent the baffle grate 4 from swinging towards the base 1 and thereby creating a gap between the baffle grate 4 and the litter tray 2 through which the litter clumps could pass through, the upper shell 3 is provided with a second limiting block 17. When the pet litter box is in a state of dumping litter clumps, the second limiting block 17 is configured to restrict the baffle grate 4 from swinging towards the base 1 to ensure the sifting effect of the baffle grate 4 on the litter clumps.

It should be understood that the litter tray 2 and its driving assembly 5 on both sides form a rotating axis, and the waste bin 6 is positioned on one side of the rotating axis.

This embodiment is the first embodiment of the driving assembly 5. On the basis of the above common structure, this embodiment further comprises the following structure: a first slot 18 is arranged on the base 1 close to the insertion hole 11, and a second slot 528 corresponding to the first slot 18 is arranged on the outer shell 52.

Referring to figures 5-7, a first grip slot 522 configured for hand insertion is formed on the outer shell 52, and a first connecting rod 523 is configured between the outer shell 52 and the inner shell 51, a first elastic member 524 is configured between the first connecting rod 523 and an inner wall of the outer shell 52, along an expansion and contraction direction of the first elastic member 524, at least a portion of the first connecting rod 523 is located in the first grip slot 522.

A first wedge block 525 is formed at an end of the first connecting rod 525 close to the base 1, the first wedge block 525 is slidably connected to a second wedge block 526, which is capable of passing through the first slot 18 and the second slot 528 to fix the driving assembly 5 on the base 1.

A second elastic member 527 is configured between the second wedge block 526 and the driving assembly 5, when the first connecting rod 523 is pulled, the first elastic member 524 is compressed, such that the first wedge block 525 driving the second wedge block 526 to press the second elastic member 527, causing the second wedge block 526 to retract into the driving assembly 5.

During the process of installing the driving assembly 5 on the base 1, the second wedge block 526 is pressed against a side wall of the insertion hole 11, and the second elastic member 527 retracts until the first slot 18 aligns with the second slot 528, thus releasing the restriction on the second elastic member 527. The second elastic member 527 then extends, enabling the second wedge block 526 to pass through the second slot 528 and the first slot 18, thereby mounting the driving assembly 5 on the base 1.

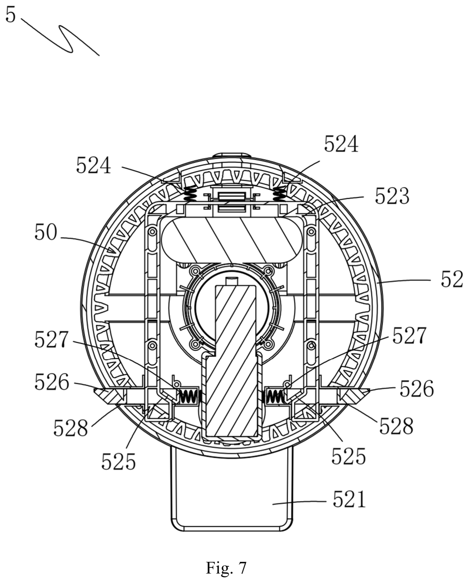

When removing the driving assembly 5 from the base 1, user inserts fingers into the first grip slot 522 and press the first connecting rod 523 within the first grip slot 522 towards the outer shell 52. As shown in figure 7, the first connecting rod 523 moves upwards under the press force, further the first elastic member 524 is compressed upwards and deformed, the first connecting rod 523 drives the first wedge block 525 to move upwards, and a vertical movement of the first wedge block 525 is converted into a horizontal movement of the second wedge block 526, causing the second elastic member 527 to be compressed and the second wedge block 526 retracts into the housing 52. This releases the constraint on the first slot 18, thereby removing the driving assembly 5 from the base 1.

The disassembly structure of driving assembly 5 is simple, easy to operate, and easy for users to assemble and operate.

Specifically, the first grip slot 522 is located on the side wall of the outer shell 52, specifically on the side of the driving assembly 5 away from the litter tray 2.

Specifically, as shown in figure 7, the expansion and contraction direction of the first elastic member 524 is perpendicular to the horizontal direction.

Specifically, as shown in figure 7, the second elastic member 527 expands and contracts along the horizontal direction.

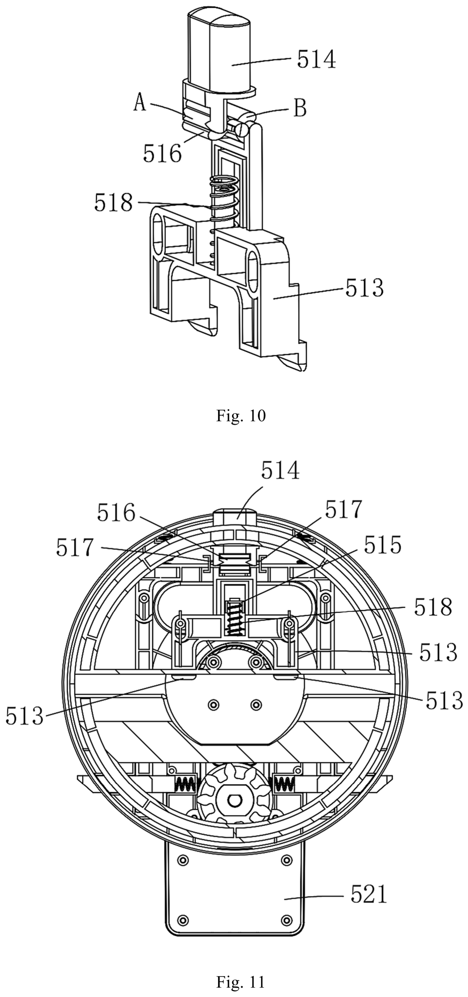

Referring to figures 10-11, this embodiment is the second embodiment of the driving assembly 5. Based on the common structure mentioned above, this embodiment further comprises the following structure: to facilitate user operation and simplify mounting of the driving assembly 5 onto the litter tray 2, a third through slot 519 is formed on side of the inner shell 51 adjacent to the litter tray 2, the driving assembly 5 further comprises a second connecting rod 513 arranged in the inner shell 51, a first button 514 arranged on the inner shell 51, a supporting member 515 fixed on the inner wall of the inner shell 51, a rotating member 516 rotatably connected to the supporting member 515, a fixing member 517 fixed on the inner wall of the inner shell 51, and a third elastic member 518 arranged between the fixing member 517 and the second connecting rod 513.

The two sides of a rotation center of the rotating member 516 are respectively named as a first end A and a second end B;

One end of the first button 514 extends outside the inner shell 51, and the other end is rotatably connected to the first end A of the rotating member 516.

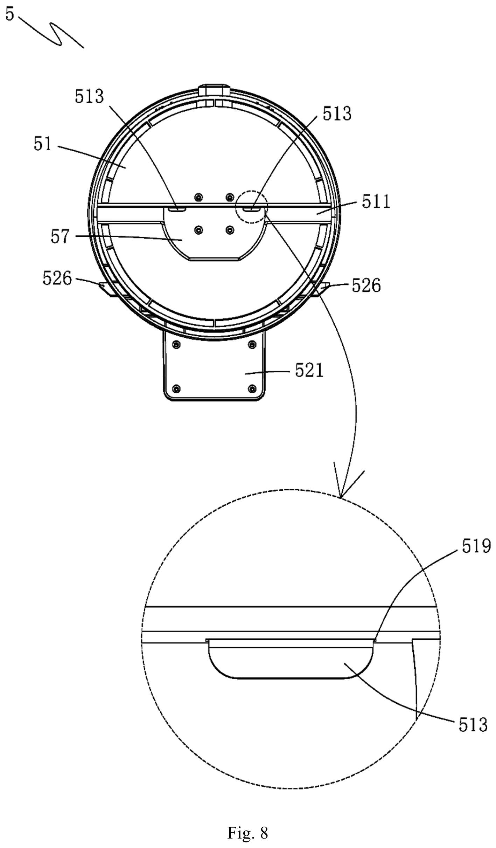

Referring to figures 8 and 10, one end of the second connecting rod 513 extends into the third through slot 519, and the other end is rotatably connected to the second end B.

When the driving assembly 5 is fixed on the edge of the litter tray 2 and needs to be unlocked, by pressing the first button 514, the first end A is pressed downwards, driving the second end B to rise, the third elastic member 518 is compressed by the second connecting rod 513 and the fixing member 517, such that the second connecting rod 513 exits from the third through slot 519 and retracts into the inner shell 51. This action removes the driving assembly 5 from the edge of the litter tray 2, thereby disengaging the locking between the driving assembly 5 and the litter tray 2.

When the first button 514 is released, the third elastic member 518 extends, driving the first end A to rise and the second end B to fall, such that the second connecting rod 513 protrudes into the third through slot 519 for securing the driving assembly 5 on the litter tray 2.

When securing the driving assembly 5 on the edge of the litter tray 2, the clipping gap 511 is engaged on the edge of the litter tray 2, and the second connecting rod 513 is pushed up and retracted by the litter tray 2. When the driving assembly 5 moves to an engagement position with the litter tray 2, the third elastic member 518 extends, driving the first end A to rise and the second end B to fall. The second connecting rod 513 then extends out from the third through groove 519 to secure the driving assembly 5 to the litter tray 2.

By pressing the first button 514 alone, user can mount the driving assembly 5 into the litter tray 2, enabling simple, convenient, and quick operation.

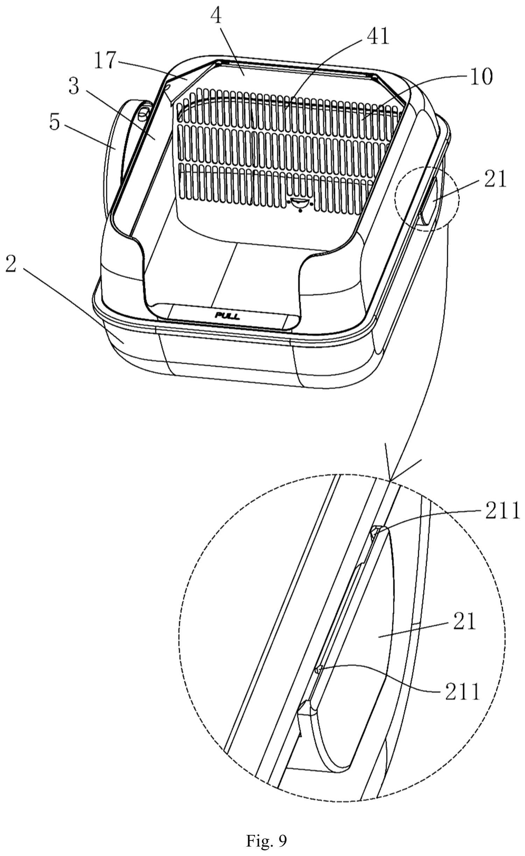

Alternatively, referring to Figures 8-10, an outer side of the litter tray 2 is provided with a mounting member 21 corresponding to the second connecting rod 513. The mounting member 21 is provided with a mating groove 211 that is adapted to the portion of the second connecting rod 513 extending out of the third through groove 519. The mating groove 211 is located outside the edge of the litter tray 2, and the driving assembly 5 is also provided with a clearance groove 57 that matches the mounting member 21. During assembly, the second connecting rod 513 extends outside the third through groove 519 and is inserted into the mating groove 211, while the edge of the litter tray 2 engages with the clipping gap 511, and the mounting member 21 engages with the clearance groove 57, so that the driving assembly 5 is firmly fixed on the litter tray 2.

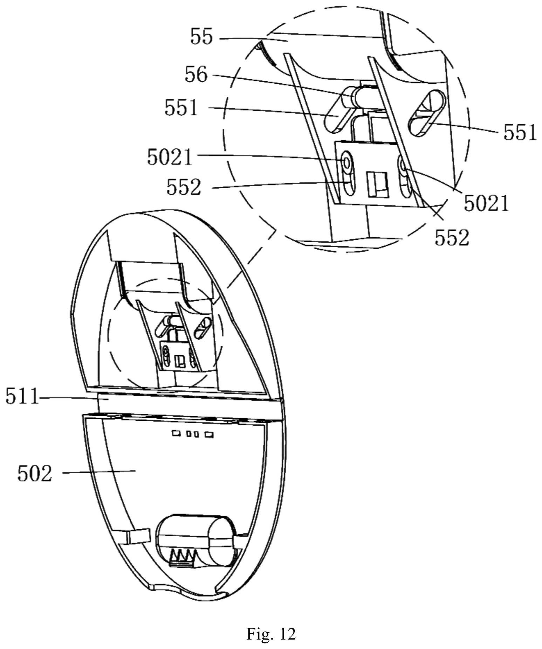

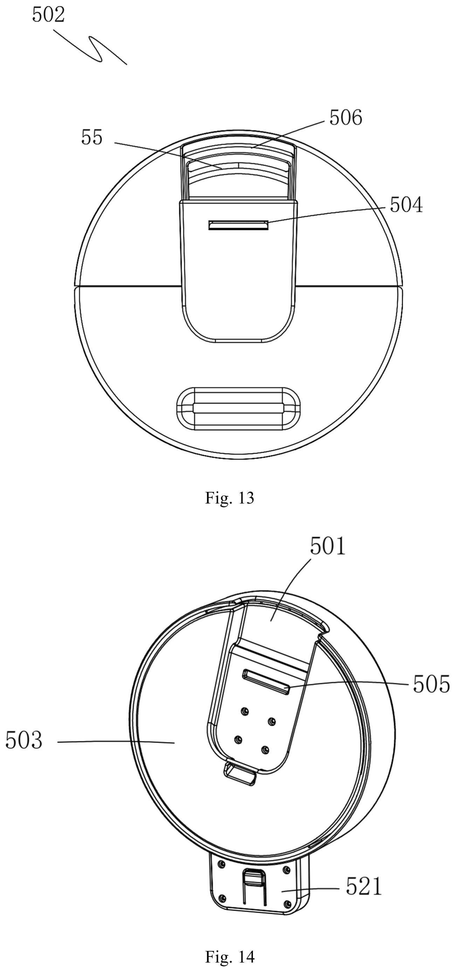

Referring to figures 12-16, in another embodiment, another embodiment provided an alternative method for securing the driving assembly 5 at the edge of the litter tray 2: the inner shell 51 comprises a first inner shell 502 detachably connected to the litter tray 2 and a second inner shell 503 detachably connected to the first inner shell 502.

The first inner shell 502 is connected to the edge of the litter tray 2 in the form of clamping for fixing the driving assembly 5 relative to the litter tray 2.

A second grip slot 501 configured for hand insertion is formed at the second inner shell 503.

A second through slot 506 is arranged on the first inner shell 502 adjacent to the second grip slot 501, a first through slot 504 is arranged on a side of the first inner shell 502 facing the second inner shell 503, and a first groove 505 is arranged on a side of the second inner shell 503 facing the first inner shell 502.

A pulling block 55 is disposed within the second through slot 506, and a pulling block groove 551 is formed in the pulling block 55, a fixing block 56 is configured to slide within the pulling block groove 551, and the fixing block 56 is configured to move along an axis of the first through slot 504 while sliding within the pulling block groove 551, thereby engaging within the first groove 505.

When securing the driving assembly 5 on the litter tray 2, hand inserts into the second grip slot 501. With bend fingers inserted into the second through slot 506, the pulling block 55 is pulled upwards. The pulling block groove 551 moves along with the pulling block 55. Specifically, the pulling block 55 moves in a direction perpendicular to the horizontal plane. The pulling block groove 551 converts the vertical movement of the pulling block 55 into the horizontal movement of the fixing block 56, aligning the first inner shell 502 and the second inner shell 503, ensuring that the first through slot 504 and the first groove 505 are aligned. Upon releasing the pulling block 55, the fixing block 56 resets, engaging within the first through slot 504 and the first groove 505 to secure the driving assembly 5 to the litter tray 2.

Similarly, in this embodiment, the user can install the driving assembly 5 into the litter tray 2 simply by pulling the pulling block 55, making the operation straightforward, convenient and efficient.

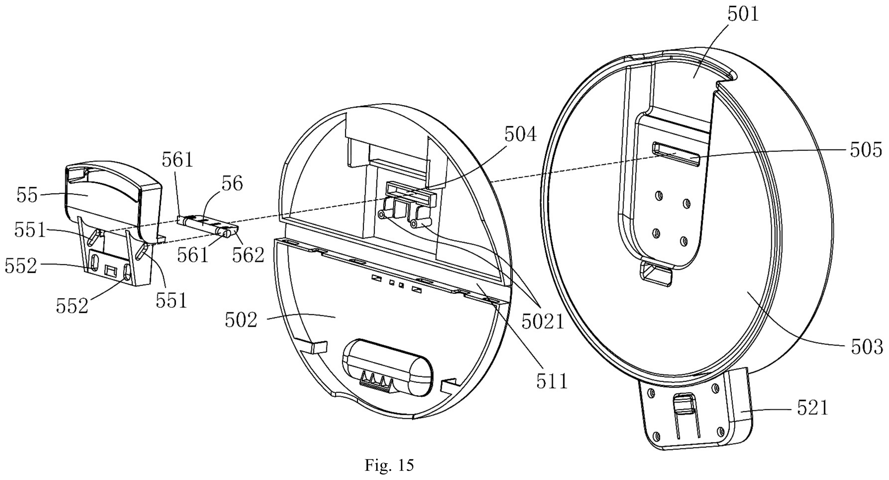

Alternatively, with reference to figure 15, the fixing block 56 is provided with a first connecting member 561 that is slidably connected within the pulling block groove 551, and a second connecting member 562 that is slidably connected between the first through slot 504 and the first groove 505, wherein the pulling block groove 551 is obliquely arranged on the pulling block 55. When the pulling block 55 is moved longitudinally by an external force, it drives the pulling block groove 551 to move longitudinally synchronously, thereby driving the first connecting member 561 to move along the pulling block groove 551, which forces the fixing block 56 to move horizontally along the current movement direction of the first connecting member 561, further driving the second connecting member 562 to move back and forth along the first through slot 504 to insert into or exit from the first groove 505, thereby enabling the assembly and disassembly of the driving assembly 5 on the litter tray 2.

Specifically, the first inner shell 502 is configured with a first guide column 5021 perpendicular to the horizontal plane, and the pulling block 55 is configured with a first sliding groove 552 perpendicular to the horizontal plane direction. When the pulling block 55 is pulled, the first sliding groove 552 slides within the first guide column 5021, and the first guide column 5021 assists in determining the direction of movement, enhancing the stability of pulling the pulling block 55.

In one embodiment, a pair of linear guide rails 19 is arranged on the bottom of the base 1, and two sides of the waste bin 6 are slidably engaged with the respective linear guide rails 19.

The linear guide rail 19 enables the waste bin 6 to be pulled out for easy removal of litter clumps.

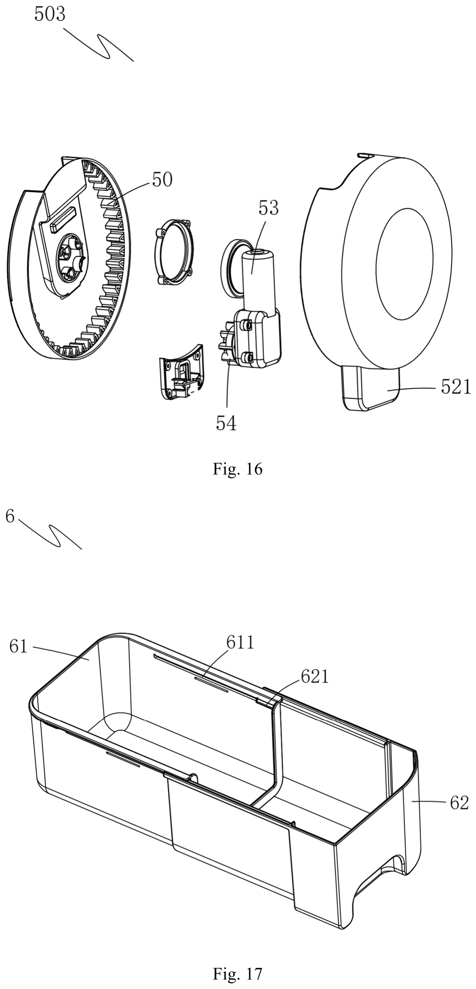

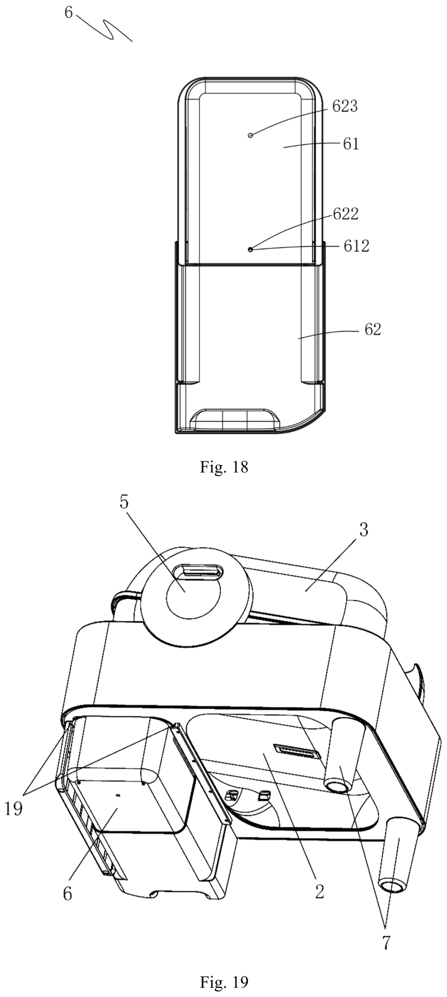

Referring to figures 17-18, in one embodiment, the waste bin 6 comprises a first section 61 and a second section 62, wherein at least a part of the first section 61 is configured to be slidably received within the second section 62, a first guide groove 611 is formed on the first section 61, and a first limiting block 621 that slides within the first guide groove 611 is formed on the second section 62.

Relative sliding between the first section 61 and the second section 62 controls the storage volume of the waste bin 6, enabling switching between large and small volumes. During transportation, move the first section 61 and the second section 62 to minimize the volume of the waste bin 6, making it easier to store and transport.

Moreover, the first limiting block 621 slides within the first guide groove 611, which can avoid the situation where the first sections 61 and the second sections 62 completely detach, causing the litter clumps in the waste bin 6 to pour out, thereby affecting the collection function of the waste bin 6.

In one embodiment, the bottom of the first section 61 is configured with a limiting protrusion 612, and the second section 62 is configured with a first limiting hole 622 and a second limiting hole 623 for inserting the limiting protrusion 612, the first limiting hole 622 and the second limiting hole 623 are configured for limiting a maximum and a minimum sliding distance of the first section 61 in the second section 62, further reducing the risk of complete detachment of the first section 61 and the second section 62 due to improper operation by the user.

In one embodiment, the base 1 comprises a full-bin sensor 14 on a side adjacent to the waste bin 6 on the for detecting whether the waste bin 6 is full.

Specifically, the full-bin sensor 14 is an infrared sensing device.

More specifically, the pet litter box is further configured with a warning light and/or audible alarm, and the full-bin sensor 14 is communicated to the warning light. When the full-bin sensor 14 detects the waste bin 6 is full, the warning light flashes to remind the user to empty the waste bin 6. Alternatively, when the full-bin sensor 14 is communicated to the audible alarm, upon the full-bin sensor 14 detects the waste bin 6 is full, the audible alarm emits a warning sound to remind the user to empty the waste bin 6.

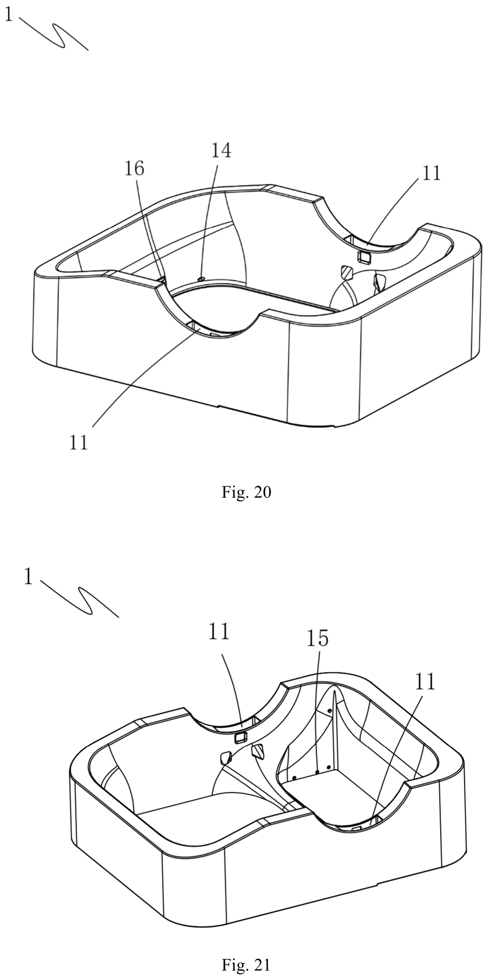

Referring to figure 21, in one embodiment, a sensing assembly 15 is arranged on the base 1, the sensing assembly 15 being communicatively connected to the driving assembly 5, when the sensing assembly 15 detects a pet entering a space between the litter tray 2 and the base 1 or reach on the litter tray 2, the driving assembly 5 stops driving the litter tray 2 to rotate.

More specifically, multiple sensing assemblies 15 are disposed around the periphery of the base 1 to detect whether pets have entered the litter tray 2.

Specifically, the sensing assembly 15 is positioned above the waste bin 6. During operation of the driving assembly 5, this sensing assembly 15 monitors for the presence of a pet above the waste bin. If detected, the driving assembly 5 stops driving the litter tray 2 to rotate, avoiding accidental injury to the pet.

Specifically, the bottom surface of the litter tray 2 is flat, this design ensures that during rotation to sift litter clumps and loose litter particles, the litter particles within the litter tray 2 can be fully sifted into the space enclosed by baffle grate 4, the upper shell 3 close to the litter tray 2, without getting stuck in the concave and convex positions at the bottom of the litter tray 2.

Specifically, the litter tray 2 is placed at an angle to concentrate the litter particles in the lowest position of the litter tray area. This ensures that even minimal litter volume can form clumps from the pet's waste.

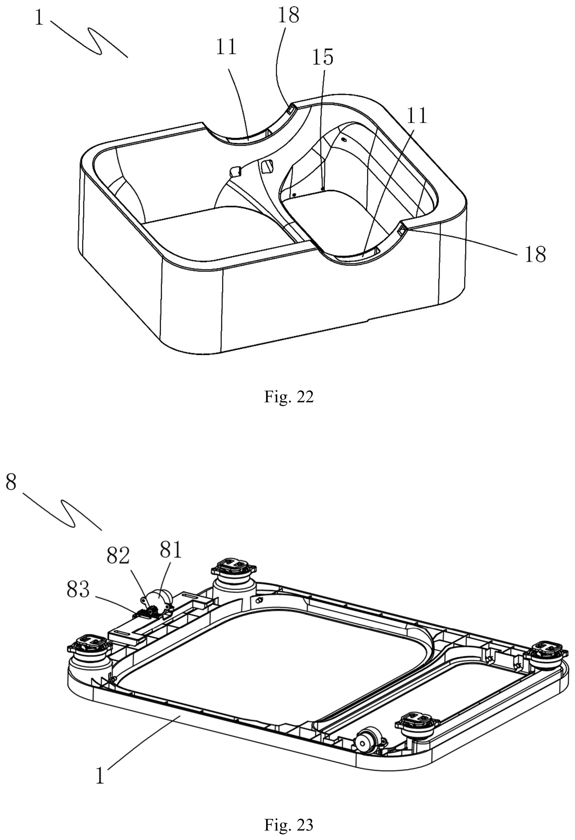

Referring to figure 23, in one embodiment, the base 1 further comprises, on a side away from the waste bin 6, an interlocking fixing structure 8 for securing the litter tray 2.

The base 1 is configured with a third slot 16 facing the waste bin 6.

The interlocking fixing structure 8 comprises a second driving component 81 fixed on the base 1, a linkage gear 82 arranged on an output end of the second driving component 81, and a supporting rod 83 meshing with the linkage gear 82.

During operation, the second driving component 81 is configured for driving the linkage gear 82 to rotate, thereby causing the supporting rod 83 to extend through the third slot 16. A portion of the supporting rod 83 extending out from the base 1 is configured for mounting the litter tray 2, with the litter tray 2 installed in a tilted orientation.

During storage, the second driving component 81 drives the linkage gear 82 to rotate, and the supporting rod 83 retracts back into the base 1 through the third slot 16, thereby freeing up space for the litter tray 2 to be fully installed into the base 1. This configuration further compresses the overall volume of the pet litter box, reducing its storage footprint.

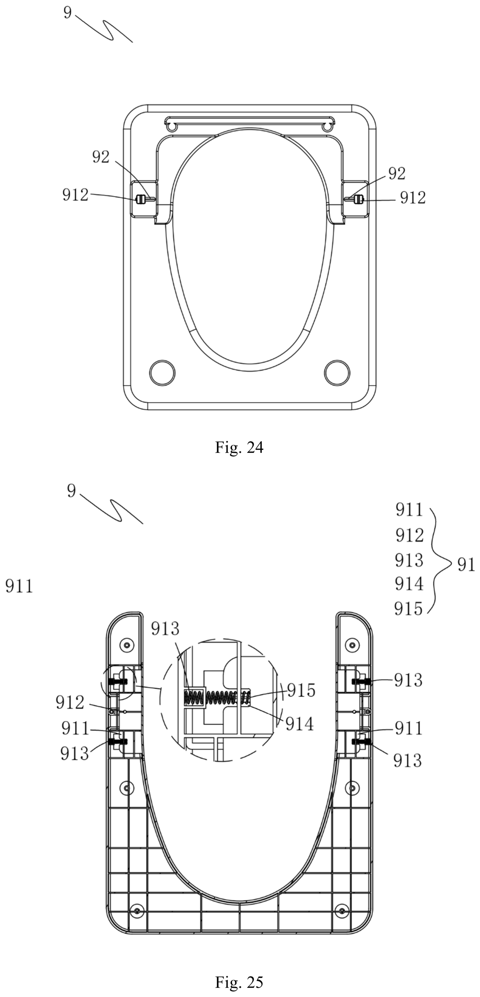

Referring to figures 24-25, in the above embodiment, manual disassembly of the waste bin 6 is required, leaving room for improvement in user convenience. Therefore, the present invention provides another embodiment: it further comprises a toilet bracket 9 detachably connected to the bottom of the base 1, the toilet bracket 9 is configured to replace the supporting feet 7 and the waste bin 6, the base 1 is fixed to a toilet through the toilet bracket 9.

In this configuration, when cleaning the litter clump in the litter tray 2, the driving assembly 5 is activated. The driving assembly 5 drives the litter tray 2 to rotate to pour the litter clump into the toilet. Users then activate the toilet flush button to flush away the litter clump.

In other embodiment, the toilet bracket 9 is equipped with two sets of clamping assembly 91 for clamping the toilet, each set of the clamping assembly 91 is positioned on opposite sides of the toilet bracket 9 respectively;

The toilet bracket 9 is configured with a second guide groove 92 on one side facing the base 1, and the clamping assembly 91 comprises a clamping block 911 arranged in the toilet bracket 9, the clamping block 911 is fixedly connected with a protruding block 912, which slides within the second guide groove 92, a fourth elastic member 913 is configured between the clamping block 911 and the inner wall of the toilet bracket 9, the fourth elastic member 913 is configured for maintaining a tendency to push the clamping block 911 out of the toilet bracket 9.

The toilet bracket 9 can be secured to the toilet by adjusting the relative distance between the two second guide grooves 92. In this embodiment, the distance between the two clamping blocks 911 is adjustable to accommodate toilets of varying sizes, thereby enhancing the universal applicability of the pet litter box.

More specifically, a clamping groove 914 is configured to the clamping block 911 and a clamping guide column 915 is configured to the clamping groove 914. An end of the fourth elastic member 913 is sleeved on the clamping guide column 915, and the other end of the fourth elastic member 913 is pressed against an inner wall of the toilet bracket 9 facing the fourth elastic member 913 to secure the expansion and contraction direction of the fourth elastic member 913.

More specifically, the clamping grooves 914, the clamping guide columns 915, and the fourth elastic members 913 are provided in two sets, respectively disposed on opposite sides of the protruding block 912.

The foregoing describes preferred embodiments of the present invention in detail. However, the invention is not limited to the embodiments. Those skilled in the art may make various equivalent modifications or substitutions without departing from the spirit and scope of the invention, and all such equivalent modifications and substitutions are encompassed within the scope of the defined by the appended claims.

## Claims

1. A pet litter box, **characterized in** comprising: a base (1), a litter tray (2) detachably installed on the base (1), an upper shell (3) detachably connected onto the base (1) or the litter tray (2), a baffle grate (4) connected to the upper shell (3) for sifting litter particles and litter clumps, several supporting feet (7) and a waste bin (6) for storing litter clumps detachably connected to a bottom of the base (1), and a driving assembly (5) detachably connected to two sides of the litter tray (2),
wherein the driving assembly (5) is configured to rotate the litter tray (2), such that the litter particles are sifted into a chamber (10) formed by a back surface of the baffle grate (4), the upper shell (3) and the litter tray (2), while the litter clumps are sifted outside the baffle grate (4) and fall into the waste bin (6),
the supporting feet (7) are located on two sides of the waste bin (6),
when the pet litter box is to be stored, all of the upper shell (3), the driving assembly (5), the supporting feet (7), and the waste bin (6) are configured to be fitted entirely within the litter tray (2).

2. The pet litter box according to claim 1, **characterized in that** the driving assembly (5) comprises an inner shell (51) firmly connected to the litter tray (2), and an outer shell (52) rotatably connected to the inner shell (51), wherein an insertion fitting (521) is arranged at a bottom of the outer shell (52), and the base (1) is configured to form an insertion hole (11) corresponding to the insertion fitting (521),
a gear rack (50) arranged on an inner circumferential wall of the inner shell (51),
a first driving component (53) is fixed in the outer shell (52), and an output end of the first driving component (53) is connected to a driving gear (54) that meshes with the gear rack (50), the first driving component (53) is configured to drive the driving gear (54) to rotate, thereby driving the inner shell (51) and the litter tray (2) to rotate relative to the base (1) and the outer shell (52).

3. The pet litter box according to claim 2, **characterized in that** a first slot (18) is arranged on the base (1) close to the insertion hole (11), and a second slot (528) corresponding to the first slot (18) is arranged on the outer shell (52),
a first grip slot (522) configured for hand insertion is formed on the outer shell (52), and a first connecting rod (523) is configured between the outer shell (52) and the inner shell (51), a first elastic member (524) is configured between the first connecting rod (523) and an inner wall of the outer shell (52), along an expansion and contraction direction of the first elastic member (524), at least a portion of the first connecting rod (523) is located in the first grip slot (522),
a first wedge block (525) is formed at one end the first connecting rod (523) close to the base (1), the first wedge block (525) is slidably connected to a second wedge block (526), which is capable of passing through the first slot (18) and the second slot (528) for fixing the driving assembly (5) on the base (1),
a second elastic member (527) is configured between the second wedge block (526) and the driving assembly (5), when the first connecting rod (523) is pulled, the first elastic member (524) is compressed, such that the first wedge block (525) drives the second wedge block (526) to press the second elastic member (527), causing the second wedge block (526) to retract into the driving assembly (5).

4. The pet litter box according to claim 2, **characterized in that** the inner shell (51) is configured with a clipping gap (511) on one side facing the litter tray (2), and the clipping gap (511) is configured to engage an edge of the litter tray (2) for fixing the driving assembly (5) relative to the litter tray (2).

5. The pet litter box according to claim 3, **characterized in that** a third through slot (519) is formed on side of the inner shell (51) adjacent to the litter tray (2), the driving assembly (5) further comprises a second connecting rod (513) arranged in the inner shell (51), a first button (514) arranged on the inner shell (51), a supporting member (515) fixed on an inner wall of the inner shell (51), a rotating member (516) rotatably connected to the supporting member (515), a fixing member (517) fixed on the inner wall of the inner shell (51), and a third elastic member (518) arranged between the fixing member (517) and the second connecting rod (513),
wherein two sides of a rotation center of the rotating member (516) are respectively named as a first end (A) and a second end (B),
one end of the first button (514) extends outside the inner shell (51), and the other end is rotatably connected to the first end (A) of the rotating member (516),
one end of the second connecting rod (513) extends into the third through slot (519), and the other end is rotatably connected to the second end (B),
when the first button (514) is pressed, the first end (A) is pressed downwards, driving the second end (B) to rise, the third elastic member (518) is compressed by the second connecting rod (513) and the fixing member (517), such that the second connecting rod (513) exits from the third through slot (519) and retracts into the inner shell (51),
when the first button (514) is released, the third elastic member (518) extends, driving the first end (A) to rise and the second end (B) to fall, such that the second connecting rod (513) protrudes into the third through slot (519) for securing the driving assembly (5) on the litter tray (2).

6. The pet litter box according to claim 3, **characterized in that** the inner shell (51) comprises a first inner shell (502) detachably connected to the litter tray (2) and a second inner shell (503) detachably connected to the first inner shell (502),
wherein the first inner shell (502) is connected to an edge of the litter tray (2) in the form of clamping for fixing the driving assembly (5) relative to the litter tray (2),
a second grip slot (501) configured for hand insertion is formed at the second inner shell (503),
a second through slot (506) is arranged on the first inner shell (502) adjacent to the second grip slot (501), a first through slot (504) is arranged on a side of the first inner shell (502) facing the second inner shell (503), and a first groove (505) is arranged on a side of the second inner shell (503) facing the first inner shell (502),
a pulling block (55) is disposed within the second through slot (506), and a pulling block groove (551) is formed in the pulling block (55), a fixing block (56) is configured to slide within the pulling block groove (551), and the fixing block (56) is configured to move along an axis of the first through slot (504) while sliding within the pulling block groove (551), thereby engaging in the first groove (505).

7. The pet litter box according to claim 6, **characterized in that** the first inner shell (502) is configured with a first guide column (5021) perpendicular to a horizontal plane, and the pulling block (55) is configured with a first sliding groove (552) perpendicular to the horizontal plane, when pulling the pulling block (55), the first sliding groove (552) slides within the first guide column (5021).

8. The pet litter box according to any of claims 1-7, **characterized in that** a pair of linear guide rails (19) is arranged on the bottom of the base (1), and two sides of the waste bin (6) are slidably engaged with the respective linear guide rails (19).

9. The pet litter box according to any of claims 1-7, **characterized in that** the waste bin (6) comprises a first section (61) and a second section (62), at least a part of the first section (61) is configured to be slidably received within the second section (62), a first guide groove (611) is formed on the first section (61), and a first limiting block (621) that slides within the first guide groove (611) is formed on the second section (62).

10. The pet litter box according to claim 9, **characterized in that** a bottom of the first section (61) is configured with a limiting protrusion (612), and the second section (62) is configured with a first limiting hole (622) and a second limiting hole (623) for inserting the limiting protrusion (612), the first limiting hole (622) and the second limiting hole (623) are configured for limiting a maximum and a minimum sliding distance of the first section (61) in the second section (62).

11. The pet litter box according to any of claims 1-7, **characterized in that** the base (1) comprises a full-bin sensor (14) on a side adjacent to the waste bin (6) for detecting whether the waste bin (6) is full.

12. The pet litter box according to any of claims 1-7, **characterized in that** a sensing assembly (15) is arranged on the base (1), the sensing assembly (15) is configured to be communicatively connected to the driving assembly (5), when the sensing assembly (15) detects a pet entering a space between the litter tray (2) and the base (1) or reach on the litter tray (2), the driving assembly (5) stop driving the litter tray (2) to rotate.

13. The pet litter box according to any of claims 1-7, **characterized in that** the base (1) further comprises, on a side away from the waste bin (6), an interlocking fixing structure (8) for securing the litter tray (2),
the base (1) is configured with a third slot (16) facing the waste bin (6),
the interlocking fixing structure (8) comprises a second driving component (81) fixed on the base (1), a linkage gear (82) arranged on an output end of the second driving component (81), and a supporting rod (83) meshing with the linkage gear (82),
the second driving component (81) is configured for driving the linkage gear (82) to rotate, thereby causing the supporting rod (83) to extend through the third slot (16), and wherein a portion of the supporting rod (83) extending out from the base (1) is configured for mounting the litter tray (2).

14. The pet litter box according to any of claims 1-7, **characterized in** further comprising a toilet bracket (9) detachably connected to the bottom of the base (1), wherein the toilet bracket (9) is configured to replace the supporting feet (7) and the waste bin (6), the base (1) is fixed to a toilet through the toilet bracket (9).

15. The pet litter box according to claim 14, **characterized in that** the toilet bracket (9) is equipped with two sets of clamping assembly (91) for clamping the toilet, each set of the clamping assembly (91) is positioned on opposite sides of the toilet bracket (9) respectively,
the toilet bracket (9) is configured with a second guide groove (92) on one side facing the base (1), and each clamping assembly (91) comprises a clamping block (911) arranged in the toilet bracket (9), the clamping block (911) is fixedly connected with a protruding block (912), which slides within the second guide groove (92), a fourth elastic member (913) is configured between the clamping block (911) and an inner wall of the toilet bracket (9), the fourth elastic member (913) is configured for maintaining a tendency to push the clamping block (911) out of the toilet bracket (9).
